# EUROPÄISCHE PATENTSCHRIFT

(11) **EP 1 025 136 B1**
(45) Veröffentlichungstag und Bekanntmachung des Hinweises auf die Patenterteilung: **08.01.2003**
(21) Anmeldenummer: 98954369.9
(22) Anmeldetag: 07.10.1998
(51) Int. Cl.: C08F 36/04, C08F 4/52

(54) **KATALYSATOR AUF BASIS VON VERBINDUNGEN DER SELTENEN ERDMETALLE FÜR DIE POLYMERISATION VON UNGESÄTTIGTEN ORGANISCHEN VERBINDUNGEN**
CATALYST WITH A BASE CONSISTING OF COMPOUNDS OF THE RARE EARTH METALS FOR POLYMERISING UNSATURATED ORGANIC COMPOUNDS
CATALYSEUR A BASE DE COMPOSES DES METAUX DES TERRES RARES S'UTILISANT POUR LA POLYMERISATION DE COMPOSES ORGANIQUES INSATURES

(30) Priorität: 20.10.1997 DE 19746266
(43) Veröffentlichungstag der Anmeldung: 09.08.2000
(73) Patentinhaber: Bayer Aktiengesellschaft, 51368 Leverkusen (DE)
(72) Erfinder: WINDISCH, Heike, D-51429 Bergisch Gladbach (DE)
(86) Internationale Anmeldenummer: EP9806376
(87) Internationale Veröffentlichungsnummer: WO99020670

(56) Entgegenhaltungen:
- DE-A- 19 512 116
- DE-A- 19 512 127
- TAUBE R ET AL: "XLVIII. Synthese und Struktur der ersten neutralen Tris(allyl)lanthanoid-Komplexe La(eta-C3H5)3 ? 1,5 Dioxan und Nd(eta-C3H5)3 ? Dioxan und ihre Eignung als ?single site ? -Katalysatoren fur die stereospezifische Butadienpolymerisation" JOURNAL OF ORGANOMETALLIC CHEMISTRY, Bd. 513, Nr. 1, 3. Mai 1996, Seite 49-61 XP004036083
- PATENT ABSTRACTS OF JAPAN vol. 018, no. 575 (C-1268), 4. November 1994 -& JP 06 211916 A (ASAHI CHEM IND CO LTD), 2. August 1994

## Beschreibung

Die Erfindung betrifft neue Katalysatoren auf Basis von Verbindungen der Seltenen Erdmetalle sowie die Verwendung der neuen Katalysatoren für die Polymerisation von ungesättigten Verbindungen, insbesondere von konjugierten Dienen.

Die Polymerisation von ungesättigten organischen Verbindungen, insbesondere konjugierten Dienen, in Gegenwart von Katalysatoren auf Basis von Seltenen Erdmetallen ist seit langem bekannt (siehe z.B. DE 28 33 721, US 4 429 089, EP 76 535, EP 92 270, EP 92 271, EP 207 558, WO 93/05083, US 5 627 119, EP 667 357, US 3 478 901, EP 637 589). Bewährt haben sich in diesem Zusammenhang insbesondere die Ziegler-Natta-Katalysatoren auf Basis der Seltenen Erdmetalle. So wird beispielsweise in EP 11 184 ein Katalysatorsystem auf Basis der Seltenen Erdmetalle, insbesondere auf Basis von Neodymverbindungen, vorgestellt, das sich sehr gut für die Polymerisation von konjugierten Dienen, insbesondere Butadien, eignet. So liefern diese Katalysatoren bei der Polymerisation von beispielsweise Butadien ein Polybutadien in sehr guten Ausbeuten und mit hoher Selektivität, das sich insbesondere durch einen hohen Anteil an cis-1,4-Einheiten auszeichnet. Nachteilig bei der Verwendung dieser Katalysatoren fiir die Polymerisation von konjugierten Dienen ist aber deren geringer Anteil an seitenständig gebundenen Vinylgruppen (1,2-Einheiten) im Polymeren. Der Anteil an 1,2-Doppelbindungen im Polymeren beträgt dabei häufig weniger als 1 %.

In WO 96/31 544 wurden Katalysatoren auf Basis von strukturell definierten Allylkomplexen der Seltenen Erdmetalle beschrieben, mit denen Dienkautschuke mit einem hohen Anteil an 1,4-cis-Doppelbindungen und einem Gehalt an 1,2-Doppelbindungen von mehr als 1 % erhalten werden. Ein großer Nachteil bei dem Einsatz dieser Katalysatoren besteht darin, daß sie als strukturell definierte Allylverbindungen sehr aufwendig und teuer herzustellen sind und damit mit den allgemein kostengünstigeren und in beliebig großen Mengen zur Verfügung stehenden Ziegler-Natta-Katalysatoren nicht konkurrieren können.

Ziel der vorliegenden Erfindung ist daher, ein Katalysatorsystem auf Basis der Seltenen Erdmetalle zur Verfügung zu stellen, mit dem bei der Polymerisation von konjugierten Dienen ein wesentlich höherer Anteil an seitenständig gebundenen Vinylgruppen im Polymeren erhalten werden kann. Polydiene mit einem hohen Gehalt an seitenständigen 1,2-Doppelbindungen in Polymeren haben insbesondere im Hinblick für den Einsatz als Modifikatoren in Kunststoffen eine große Bedeutung, um dort beispielsweise die Schlagzähigkeit zu erhöhen. Beispiele für solche Kautschuk/Kunststoff-Kombinationen sind HIPS und ABS (Ullmann, 4. Auflage, Bd. 19, S. 265 ff. und S. 277 ff.). Darüber hinaus ist es wünschenswert - aus wirtschaftlichen Gründen -, daß die Katalysatoren in gängigen aliphatischen Lösungsmitteln eingesetzt werden können und daß mit deren Hilfe eine Steuerung des 1,4-cis- und 1,4-trans-Gehaltes bei den Polydienen bei gleichbleibendem Gehalt an 1,2-Doppelbindungen im Polymeren möglich ist.

Gegenstand der vorliegenden Erfindung ist somit ein Katalysator auf Basis von Verbindungen der Seltenen Erdmetalle bestehend aus
a) einer Verbindung der Seltenen Erdmetalle,
b) einem Cyclopentadien und
c) einem Alumoxan,
wobei das molare Verhältnis der Komponenten (a):(b):(c) im Bereich von 1:0,01 bis 1,99:1 bis 1000 liegt.

Bevorzugt liegt das molare Verhältnis der Komponenten (a):(b):(c) im Bereich von 1:0,2 bis 1,8:3 bis 500, besonders bevorzugt 1:0,5 bis 1,5:5 bis 100.

Als Verbindungen der Seltenen Erdmetalle (Komponente (a)) kommen insbesondere solche in Frage, die ausgewählt sind aus
- einem Alkoholat der Seltenen Erdmetalle,
- in einem Phosphonat, Phosphinat und/oder Phosphat der Seltenen Erdmetalle,
- einem Carboxylat der Seltenen Erdmetalle,
- einer Komplexverbindung der Seltenen Erdmetalle mit Diketonen und/oder
- einer Additionsverbindung der Halogenide der Seltenen Erdmetalle mit einer Sauerstoff- oder Stickstoff-Donatorverbindung.

Die zuvor genannten Verbindungen der Seltenen Erdmetalle sind beispielsweise näher beschrieben in EP 11 184.

Die Verbindungen der Seltenen Erdmetalle basieren insbesondere auf den Elementen mit den Ordnungszahlen 21, 39 und 57 bis 71. Bevorzugt werden als Seltene Erdmetalle eingesetzt Lanthan, Praseodym oder Neodym oder ein Gemisch von Elementen der Seltenen Erdmetalle, welches mindestens eines der Elemente Lanthan, Praseodym oder Neodym zu wenigstens 10 % Gew.-% enthält. Ganz besonders bevorzugt werden als Seltene Erdmetalle Lanthan oder Neodym eingesetzt, die wiederum mit anderen Seltenen Erdmetallen abgemischt sein können. Der Anteil an Lanthan und/oder Neodym in einem solchen Gemisch beträgt besonders bevorzugt mindestens 30 Gew.-%.

Als Alkoholate, Phosphonate, Phosphinate und Carboxylate der Seltenen Erdmetalle oder als Komplexverbindungen der Seltenen Erdmetalle mit Diketonen kommen insbesondere solche in Frage, in denen die in den Verbindungen enthaltene organische Gruppe insbesondere geradkettig oder verzweigte Alkylreste mit 1 bis 20 Kohlenstoffatomen, bevorzugt 1 bis 15 Kohlenstoffatomen, enthält, wie Methyl, Ethyl, n-Propyl, n-Butyl, n-Pentyl, Isopropyl, Isobutyl, tert.-Butyl, 2-Ethylhexyl, neoPentyl, neo-Octyl, neo-Decyl oder neo-Dodecylreste.

Als Alkoholate der Seltenen Erden werden z.B. genannt:
Neodym(III)-n-propanolat, Neodym(III)-n-butanolat, Neodym(III)-n-decanolat, Neodym(III)-iso-propanolat, Neodym(III)-2-ethyl-hexanolat, Praseodym(III)-n-propanolat, Praseodym(III)-n-butanolat, Praseodym(III)-n-decanolat, Praseodym(III)-isopropanolat, Praseodym(III)-2-ethyl-hexanolat, Lanthan(III)-n-propanolat, Lanthan(III)-n-butanolat, Lanthan(III)-n-decanolat, Lanthan(III)-iso-propanolat, Lanthan(III)-2-ethyl-hexanolat, bevorzugt Neodym(III)-n-butanolat, Neodym(III)-n-decanolat, Neodym(III)-2-ethyl-hexanolat.

Als Phosphonate, Phosphinate und Phosphate der Seltenen Erden werden z.B. genannt: Neodym(III)-dibutylphosphonat, Neodym(III)-dipentylphosphonat, Neodym(III)-dihexylphosphonat, Neodym(III)-diheptylphosphonat, Neodym(III)-dioctylphosphonat, Neodym(III)-dinonylphosphonat, Neodym(III)-didodecylphosphonat, Neodym(III)-dibutylphosphinat, Neodym(III)-dipentylphosphinat, Neodym(III)-dihexylphosphinat, Neodym(III)-dihepytylphosphinat, Neodym(III)-dioctylphosphinat, Neodym(III)-dinonylphosphinat, Neodym(III)-didodecylphosphinat und Neodym(III)-phosphat, bevorzugt Neodym(III)-dioctylphosphonat und Neodym(III)-dioctylphosphinat.

Als Carboxylate der Seltenen Erdmetalle sind geeignet:
Lanthan(III)-propionat, Lanthan(III)-diethylacetat, Lanthan(III)-2-ethylhexanoat, Lanthan(III)-stearat, Lanthan(III)-benzoat, Lanthan-(III)-cyclohexancarboxylat, Lanthan(III)-oleat, Lanthan(III)-versatat, Lanthan(III)-naphthenat, Praseodym(III)-propionat, Praseodym(III)-diethylacetat, Praseodym(III)-2-ethylhexanoat, Praseodym(III)-stearat, Praseodym(III)-benzoat, Praseodym(III)-cyclohexancarboxylat, Praseodym(III)-oleat, Praseodym(III)-versatat, Praseodym(III)-naphthenat, Neodym(III)-propionat, Neodym(III)-diethylacetat, Neodym(III)-2-ethylhexanoat, Neodym(III)-stearat, Neodym(III)-benzoat, Neodym(III)-cyclohexancarboxylat, Neodym(III)-oleat, Neodym(III)-versatat, Neodym(III)-naphthenat, bevorzugt Neodym(III)-2-ethylhexanoat, Neodym(III)-versatat, Neodym(III)-naphthenat. Besonders bevorzugt ist Neodymversatat.

Als Komplexverbindungen der Seltenen Erdmetalle mit Diketonen seien genannt:
Lanthan(III)-acetylacetonat, Praseodym(III)-acetylacetonat, Neodym(III)-acetylacetonat, bevorzugt Neodym(III)-acetylacetonat.

Als Additionsverbindungen der Halogenide der Seltenen Erdmetalle mit einer Sauerstoff- oder Stickstoff-Donatorverbindung werden beispielsweise genannt:
Lanthan(III)-chlorid mit Tributylphosphat, Lanthan(III)-chlorid mit Tetrahydrofuran, Lanthan(III)-chlorid mit iso-Propanol, Lanthan(III)-chlorid mit Pyridin, Lanthan(III)-chlorid mit 2-Ethylhexanol, Lanthan(III)-chlorid mit Ethanol, Praseodym(III)-chlorid mit Tributylphosphat, Praseodym(III)-chlorid mit Tetrahydrofuran, Praseodym(III)-chlorid mit iso-Propanol, Praseodym(III)-chlorid mit Pyridin, Praseodym(III)-chlorid mit 2-Ethylhexanol, Praseodym(III)-chlorid mit Ethanol, Neodym(III)-chlorid mit Tributylphosphat, Neodym(III)-chlorid mit Tetrahydrofuran, Neodym(III)-chlorid mit iso-Propanol, Neodym(III)-chlorid mit Pyridin, Neodym(III)-chlorid mit 2-Ethylhexanol, Neodym(III)-chlorid mit Ethanol, Lanthan(III)-bromid mit Tributylphosphat, Lanthan(III)-bromid mit Tetrahydrofuran, Lanthan(III)-bromid mit iso-Propanol, Lanthan(III)-bromid mit Pyridin, Lanthan(III)-bromid mit 2-Ethylhexanol, Lanthan(III)-bromid mit Ethanol, Praseodym(III)-bromid mit Tributylphosphat, Praseodym(III)-bromid mit Tetrahydrofuran, Praseodym(III)-bromid mit iso-Propanol, Praseodym(III)-bromid mit Pyridin, Praseodym(III)-bromid mit 2-Ethylhexanol, Praseodym(III)-bromid mit Ethanol, Neodym(III)-bromid mit Tributylphosphat, Neodym(III)-bromid mit Tetrahydrofuran, Neodym(III)-bromid mit iso-Propanol, Neodym(III)-bromid mit Pyridin, Neodym(III)-bromid mit 2-Ethylhexanol, Neodym(III)-bromid mit Ethanol, bevorzugt Lanthan(III)-chlorid mit Tributylphosphat, Lanthan(III)-chlorid mit Pyridin, Lanthan(III)-chlorid mit 2-Ethylhexanol, Praseodym(III)-chlorid mit Tributylphosphat, Praseodym(III)-chlorid mit 2-Ethylhexanol, Neodym(III)-chlorid mit Tributylphosphat, Neodym(III)-chlorid mit Tetrahydrofuran, Neodym(III)-chlorid mit 2-Ethylhexanol, Neodym(III)-chlorid mit Pyridin, Neodym(III)-chlorid mit 2-Ethylhexanol, Neodym(III)-chlorid mit Ethanol.

Ganz besonders bevorzugt werden als Verbindungen der Seltenen Erdmetalle eirigesetzt Neodymversatat, Neodymoctanoat und/oder Neodymnaphthenat.

Die obengenannten Verbindungen der Seltenen Erdmetalle können sowohl einzeln als auch im Gemisch untereinander eingesetzt werden. Das günstigste Mischungsverhältnis kann leicht durch entsprechende Vorversuche bestimmt werden.

Als Cyclopentadiene (Komponente (b)) werden Verbindungen der Formeln (I), (II) oder (III) 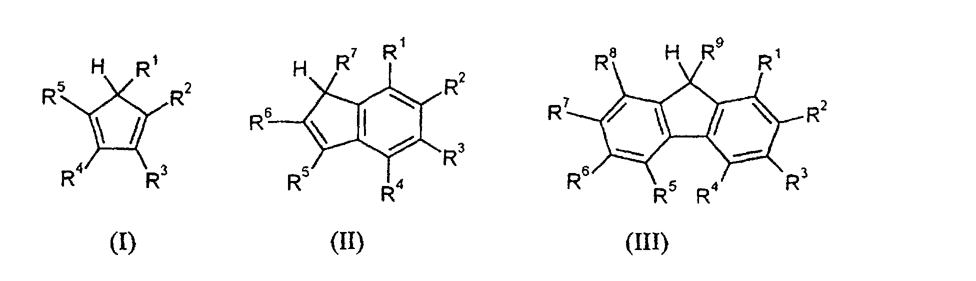 eingesetzt, in denen R¹ bis R⁹ gleich oder verschieden sind oder gegebenenfalls miteinander verbunden sind oder am Cyclopentadien der Formel (I), (II) oder (III) kondensiert sind, und für Wasserstoff, eine C₁- bis C₃₀-Alkylgruppe, eine C₆- bis C₁₀-Arylgruppe, eine C₇- bis C₄₀-Alkylarylgruppe, eine C₃- bis C₃₀- Silylgruppe stehen können, wobei die Alkylgruppen entweder gesättigt oder einfach oder mehrfach ungesättigt sein können und Heteroatome, wie Sauerstoff, Stickstoff oder Halogenide, enthalten können. Insbesondere können die Reste für Wasserstoff, Methyl, Ethyl, n-Propyl, Isopropyl, n-Butyl, Isobutyl, tert.-Butyl, Phenyl, Methylphenyl, Cyclohexyl, Benzyl, Trimethylsilyl oder Triflourmethyl stehen.

Beispiele fiir die Cyclopentadiene sind das unsubstituierte Cyclopentadien, Methylcyclopentadien, Ethylcyclopentadien, n-Butylcyclopentadien, tert.-Butylcyclopentadien, Vinylcyclopentadien, Benzylcyclopentadien, Phenylcyclopentadien, Trimethylsilylcyclopentadien, 2-Methoxyetlylcyclopentadien, 1,2-Dimethylcyclopentadien, 1,3-Dimethylcyclopentadien, Trimethylcyclopentadien, Tetramethylcyclopentadien, Tetraphenylcyclopentadien, Tetrabenzylcyclopentadien, Pentamethylcyclopentadien, Pentabenzylcyclopentadien, Ethyl-tetramethylcyclopentadien, Trifluormethyl-tetramethylcyclopentadien, Inden, 2-Methylindenyl, Trimethylinden, Hexamethylinden, Heptamethylinden, 2-Methyl-4-phenylindenyl, Fluoren oder Methylfluoren.

Die Cyclopentadiene können ebenfalls einzeln oder im Gemisch untereinander eingesetzt werden.

Als Alumoxane (Komponente (c)) werden Aluminium-Sauerstoff-Verbindungen eingesetzt, die, wie dem Fachmann bekannt ist, durch Kontakt von Aluminiumorganylen mit kondensierenden Komponenten, wie z.B. Wasser, erhalten werden und die nichtcyclische und/oder cyclische Verbindungen der Formel (-Al(R)O-)ₙ enthalten, wobei R gleich oder verschieden sein kann und für eine lineare oder verzweigte C₁- bis C₁₀-Alkylgruppe steht, die Heteroatome, wie Sauerstoff oder Halogene, enthalten kann. Insbesondere steht R für Methyl, Ethyl, n-Propyl, iso-Propyl, n-Butyl, iso-Butyl, tert.-Butyl, n-Octyl oder iso-Octyl, besonders bevorzugt fiir Methyl, Ethyl oder iso-Butyl. Als Beispiele fiir Alumoxane werden genannt: Methylalumoxan, Ethylalumoxan und iso-Butylalumoxan, bevorzugt Methylalumoxan und iso-Butylalumoxan.

Die Aluminiumoxane können wiederum einzeln oder im Gemisch untereinander eingesetzt werden.

Es ist auch möglich, den bewährten Katalysatorkomponenten (a) bis (c) noch eine weitere Komponente (d) zuzusetzen. Diese Komponente (d) kann ein konjugiertes Dien sein, das das gleiche Dien sein kann, das später mit dem Katalysator polymerisiert werden soll. Bevorzugt werden verwendet Butadien und/oder Isopren.

Wird die Komponente (d) dem Katalysator zugesetzt, so beträgt die Menge an (d) bevorzugt 1 bis 1000 mol, bezogen auf 1 mol der Komponente (a), besonders bevorzugt 1 bis 100 mol. Ganz besonders bevorzugt werden 1 bis 50 mol, bezogen auf 1 mol der Komponente (a), an (d) eingesetzt.

Der erfindungsgemäße Katalysator wird hergestellt, indem man die Komponenten (a) bis (d) in beliebiger Reihenfolge in einem inerten Lösungs- und/oder Verdünnurigsmittel miteinander vermischt. Die einzelnen Komponenten können wahlweise ohne Lösungsmittel zum vorgelegten Lösungs- und/oder Verdünnungsmittel zugegeben werden oder gelöst oder suspendiert in einem geeigneten Lösungs- und/oder Verdünnungsmittel miteinander vermischt werden.

Die Lösungs- und/oder Verdünnungsmittel können gleich oder verschieden von dem Lösungsmittel sein, in dem die Polymerisation erfolgt. Der Katalysator wird bei Temperaturen hergestellt, die zwischen dem Schmelz- und dem Siedepunkt der eingesetzten Lösungsmittel liegen. Geeignet sind Temperaturen von -80 bis 140°C, besonders geeignet von -40 bis 100°C. Die Herstellung des Katalysators kann gesondert oder durch Zugabe der einzeln oder teilweise im Gemisch vorliegenden Katalysatorkomponenten zum Polymerisationsansatz erfolgen, wobei die Zugabe des Monomeren vor, während oder nach der Zugabe der Katalysatorkomponenten erfolgen kann.

Als inerte Lösungs- und/oder Verdünnungsmittel sind aromatische, aliphatische und cycloaliphatische Kohlenwasserstoffe geeignet, wie z.B. Benzol, Toluol, Pentan, n-Hexan, iso-Hexan, Heptan und Cyclohexan, und/oder halogenierte Kohlenwasserstoffen, wie z.B. Dichlormethan und Chlorbenzol. Die Lösungsmittel können für alle Komponenten gleich oder verschieden sein und können auch im Gemisch untereinander eingesetzt werden.

Die erfindungsgemäßen Katalysatoren eigenen sich für die Polymerisation von ungesättigten organischen Verbindungen, insbesondere für die Polymerisation von konjugierten Dienen, wie z.B. 1,3-Butadien, Isopren, 2-Phenyl-1,3-butadien, 1,3-Pentadien, 2-Methyl-1,3-pentadien, 4-Methyl-1,3-pentadien und/ oder 2,4-Hexadien. Weiterhin können bei der Polymerisation der Diene gegebenenfalls ein oder mehrere 1-Olefin(e) zugesetzt werden, wie z.B. Ethylen, Propen, 1-Buten, 1-Hexen, 1-Octen, Styrol, Methylstyrol. Weiterhin kann die Polymerisation natürlich auch in Gegenwart von weiteren Verbindungen durchgeführt werden, die z.B. der Regelung des Molekulargewichts dienen können, wie z.B. Wasserstoff oder 1,2-Butadien.

Die Polymerisation der konjugierten Diene, gegebenenfalls in Abmischung mit 1-Olefinen, kann in üblicher Weise, wie beispielsweise beschrieben in EP 11 184, durchgeführt werden. Die Menge an gegebenenfalls zuzusetzenden 1-Olefinen richtet sich u.a. nach dem jeweiligen Einsatzzweck der herzustellenden Polydiene. Das Mengenverhältnis läßt sich daher leicht durch entsprechende Vorversuche bestimmen.

Eine besonders geeignete Ausführungsform zur Herstellung des Katalysators besteht darin, daß man den Katalysator separat herstellt, indem man die Katalysatorkomponenten (a), (b), (c) und (d) in einem geeigneten Lösungs- und/oder Verdünnungsmittel bei Temperaturen von -40 bis 80°C in beliebiger Reihenfolge miteinander mischt und nach einer bestimmten Reaktionszeit die gesamte Katalysatorlösung in das Polymerisationsgefäß gibt. Die bevorzugte Reaktionszeit richtet sich nach der Temperatur und kann im Bereich von einer Minute bis zu mehreren Tagen liegen, wobei eine Erhöhung der Reaktionszeit sich nicht nachteilig auf die Eigenschaften des Katalysators auswirkt.

Die Reihenfolge der Zugabe der Katalysatorkomponenten hat keinen Einfluß auf die Bildung des Katalysators. Die Zugabe der Komponenten kann gleichzeitig oder nacheinander erfolgen. Eine geeignete Ausführungsform ist z.B. die Zugabe der Komponenten in der Reihenfolge Lösungsmittel - (d) - (a) - (b)- (c) oder in der Reihenfolge Lösungsmittel - (d) - (c) - (b) - (a).

Die Polymerisation erfolgt, indem man den Katalysator mit einer Lösung des Monomeren in einem geeigneten Lösungsmittel zusammengibt. Die Menge des eingesetzten Katalysators bezogen auf 100 g Monomer liegt im Bereich von 0,01 bis 10 mmol der Komponente (a), bevorzugt im Bereich von 0,02 bis 1 mmol der Komponente (a). Die eingesetzten Lösungsmittel sollen sich gegenüber dem Katalysator inert verhalten. Geeignet sind z.B. aromatische, aliphatische und cycloaliphatische Kohlenwasserstoffe, wie Benzol, Toluol, Pentan, n-Hexan, iso-Hexan, Heptan und/oder Cyclohexan. Die Polymerisation wird bei Temperaturen von 0 bis 150 °C, bevorzugt von 20 bis 130°C, durchgeführt.

In einer üblichen Ausführungsform wird das Katalysatorsystem einer Mischung von 100 Gew.-Teilen Lösungsmittel mit 5 bis 50 Gew.-Teilen Monomer, bevorzugt 8 bis 40 Gew.-Teile, zugesetzt. Die Polymerisation springt, erkennbar an einer Wärmeentwicklung, sofort an. Nach Erreichen des gewünschten Umsatzes wird der Katalysator durch Zugabe geringer Mengen an geeigneten Desaktivatoren, wie z.B. Wasser, Carbonsäuren oder Alkoholen, desaktiviert. Der Polymerlösung werden vor der Aufarbeitung in den üblichen Mengen geeignete Stabilisatoren zugesetzt, wie z.B. sterisch gehinderte Phenole oder aromatische Amine. Die Isolierung der Polymeren erfolgt in bekannter Weise, z.B. durch Eindampfen der Polymerlösung oder Fällen des Polymeren mit einem Nichtlösungsmittel, wie z.B. Methanol, Ethanol oder Aceton, oder durch Wasserdampfdestillation des Lösungsmittels. Die Trocknung erfolgt nach üblichen Verfahren, wie z.B. im Trockenschrank oder in einem Schneckentrockner.

Es ist auch möglich, die Polymerisation von Diolefinen mit dem beschriebenen Katalysatorsystem ohne Zusatz von Lösungsmittel durchzurühren. Die Polymerisation kann dabei sowohl in flüssigem Monomeren oder, nach geeigneter Trägerung des Katalysatorsystems, auch in der Gasphase durchgeführt werden.

Das neue Katalysatorsystem zeichnet sich insbesondere dadurch aus, daß es leicht herstellbar ist, daß die Steuerung der Verhältnisse an cis-trans-Doppelbindungen durch die Art der verwendeten Cyclopentadiene sowie der Reaktionsführung in einem weiten Bereich möglich ist. Der Gehalt an seitenständigen Vinylgruppen liegt unabhängig von der Reaktionsführung fast unverändet im Bereich von etwa 3 bis 15 %, bevorzugt im engeren Bereich von 5 bis 12%, und kann durch die Art der verwendeten Cyclopentadiene gezielt beeinflußt werden.

Die nachfolgenden Beispiele sollen die vorliegende Erfindung verdeutlichen, ohne diese jedoch auf diese Beispiele einzuschränken.

### Beispiele

Die Beispiele wurden mit gereinigten Lösungsmitteln (n-Hexan und Toluol) und Monomeren (1,3-Butadien) unter Ausschluß von Luft und Feuchtigkeit unter Argon-Atmosphäre durchgeführt. Die Lösungspolymerisationen wurden unter Argon in mit Septum verschlossenen 0,5 1-Flaschen durchgeführt. Die Bestimmung der Selektivität des Polybutadiens (1,4-cis, 1,4-trans und 1,2-Doppelbindungen) erfolgte mittels IR-Spektroskopie.

### Beispiele 1 bis 9

### Alterung

In einem 20 ml-Schlenkgefäß wurden unter Argon zu einer Lösung von 2 mmol NDV (Neodym(III)-versatat) in 5,7 ml n-Hexan bei 25°C 0,23 ml (2 mmol) Inden, 36,1 ml einer 1,66 molaren Lösung von MAO (Methylalumoxan) in Toluol und 5,33 g 1,3-Butadien gegeben und die erhaltene Mischung mit Toluol auf ein Gesamtvolumen von 50 ml aufgefüllt. Die Katalysatorlösung wurde mit einem Magnetrührer gerührt, die Reaktionstemperatur wurde durch ein äußeres Bad eingestellt. Die Temperaturen und die Alterungszeiten sind in Tabelle 1 und 2 angegeben.

### Polymerisation

Die Polymerisation erfolgte in einer 0,5 l-Flasche, die mit einem Kronkorken mit integriertem Septum versehen wurde. Unter Argon wurde in der Flasche 150 ml n-Hexan vorgelegt, die Flasche dann mit einem Septum verschlossen, die angegebene Menge an 1,3-Butadien mit einer Kanüle flüssig zugegeben und anschließend die angegebene Menge der gealterten Katalysatorlösung mit einer Spritze zugegeben. Während der Polymerisation wurde die Temperatur durch ein Wasserbad eingestellt. Das Polymere wurde nach der angegebenen Reaktionszeit durch Fällen der Polymerlösung in Methanol/BKF isoliert und 1 Tag im Vakuumtrockenschrank bei 60°C getrocknet. Die Ansatzgrößen, Reaktionsbedingungen und die Eigenschaften des erhaltenen Polymeren sind in Tabelle 1 und 2 angegeben.

**Tabelle 1**

| Beispiele 1 bis 5 | | | | | |
|---|---|---|---|---|---|
| | Beispiel 1 | Beispiel 2 | Beispiel 3 | Beispiel 4 | Beispiel 5 |
| Alterung | | | | | |
| Temperatur | -20°C | 4°C | 30°C | 30°C | 50°C |
| Reaktionszeit | 4 h | 1 h | 1 h | 4 h | 1 h |

| Polymerisation | | | | | |
|---|---|---|---|---|---|
| Katalysatorlösung | 5 ml | 5 ml | 5 ml | 5 ml | 5 ml |
| Nd-Komponente | 0,2 mmol | 0,2 mmol | 0,2 mmol | 0,2 mmol | 0,2 mmol |
| n-Hexan | 150 ml | 150 ml | 150 ml | 150 ml | 150 ml |
| 1,3-Butadien | 21,63 g | 19,86 g | 20,71 g | 21,53 g | 24,14 g |
| Temperatur | 60°C | 60°C | 60°C | 60°C | 60°C |
| Reaktionszeit | 3,5 h | 3,5 h | 3,5 h | 3,5 h | 3,5 h |

| Polymer | | | | | |
|---|---|---|---|---|---|
| BR | 6,16 g | 10,65 g | 13,60 g | 20,43 g | 21,04 g |
| cis/trans/1,2 in % | 43/52/5 | 41/54/5 | 48/49/4 | 39/57/4 | 40/56/4 |

**Tabelle 2**

| Beispiele 6 bis 9 | | | | |
|---|---|---|---|---|
| | Beispiel 6 | Beispiel 7 | Beispiel 8 | Beispiel 9 |
| Alterung | | | | |
| Temperatur | 50°C | 50°C | 50°C | 50°C |
| Reaktionszeit | 2 h | 2,5 h | 24 h | 24 h |

| Polymerisation | | | | |
|---|---|---|---|---|
| Katalysatorlösung | 5 ml | 2 ml | 1 ml | 1 ml |
| Nd-Komponente | 0,2 mmol | 0,08 mmol | 0,04 mmol | 0,04 mmol |
| n-Hexan | 150 ml | 150 ml | 150 ml | 150 ml |
| 1,3-Butadien | 19,68 g | 21,05 g | 24,60 g | 21,79 g |
| Temperatur | 60°C | 60°C | 60°C | 60°C |
| Reaktionszeit | 1 h | 1 h | 1 h | 0,5 h |

| Polymer | | | | |
|---|---|---|---|---|
| BR | 20,04 g | 17,10 g | 20,06 g | 10,98 g |
| cis/trans/1,2 in % | 39/56/5 | 51/45/4 | 60/35/5 | 74/21/5 |

### Beispiele 10 bis 19

### Alterung

In ein 20 ml-Schlenkgefäß wurden unter Argon zu einer Lösung von 2 mmol NDV (Neodym(III)-versatat) in 5,7 ml n-Hexan bei 25°C jeweils 2 mmol der in Tabelle 3 angegebenen Cyclopentadiene, 36,1 ml einer 1,66 molaren Lösung von MAO (Methylalumoxan) in Toluol und 5,33 g 1,3-Butadien gegeben und die erhaltene Mischung mit Toluol auf ein Gesamtvolumen von 50 ml aufgefüllt. Die Katalysatorlösung wurde mit einem Magnetrührer gerührt, die Reaktionstemperatur wurde durch ein äußeres Bad eingestellt. Die Temperaturen und die Alterungszeiten sind in Tabelle 3 und 4 angegeben.

### Polymerisation

Die Polymerisation erfolgte wie fiir Beispiel 1 bis 9 beschrieben. Die Ansatzgrößen, Reaktionsbedingungen und die Eigenschaften des erhaltenen Polymeren sind in Tabelle 3 und 4 angegeben.

**Tabelle 3**

| Beispiele 10 bis 14 | | | | | |
|---|---|---|---|---|---|
| | Beispiel 10 | Beispiel 11 | Beispiel 12 | Beispiel 13 | Beispiel 14 |
| Cyclopentadien | Pentamethylcyclopentadien | | | Tetramethylcyclopentadien | |
| Alterung | | | | | |
| Temperatur | 50°C | 50°C | 30°C | 30°C | 50°C |
| Reaktionszeit | 2 h | 1 h | 4 h | 4 h | 1 h |

| Polymerisation | | | | | |
|---|---|---|---|---|---|
| Katalysatorlösung | 5 ml | 1 ml | 0,5 ml | 5 ml | 1 ml |
| Nd-Komponente | 0,2 mmol | 0,04 mmol | 0,08 mmol | 0,2 mmol | 0,04 mmol |
| n-Hexan | 150 ml | 150 ml | 150 ml | 150 ml | 150 ml |
| 1,3-Butadien | 19,50 g | 21,73 g | 22,48 g | 23,19 g | 20,03 g |
| Temperatur | 60°C | 60°C | 40°C | 60°C | 60°C |
| Reaktionszeit | 1 h | 1 h | 1 h | 1 h | 1 h |

| Polymer | | | | | |
|---|---|---|---|---|---|
| BR | 19,33 g | 19,89 g | 1,66 g | 23,04 g | 18,14 g |
| cis/trans/1,2 in % | 21/70/9 | 43/47/10 | 76/13/11 | 32/61/6 | 45/50/6 |

**Tabelle 4**

| Beispiele 15 bis 19 | | | | | |
|---|---|---|---|---|---|
| | Beispiel 15 | Beispiel 16 | Beispiel 17 | Beispiel 18 | Beispiel 19 |
| Cyclopentadien | Di(tert.-butyl)cyclopentadien | | Cyclopentadien | Methylcyclopentadien | Fluoren |
| Alterung | | | | | |
| Temperatur | 50°C | 50°C | 50°C | 25°C | 25°C |
| Reaktionszeit | 1 h | 19 h | 2 h | 12 h | 12 h |

| Polymerisation | | | | | |
|---|---|---|---|---|---|
| Katalysatorlösung | 5 ml | 1 ml | 5 ml | 5 ml | 5 ml |
| Nd-Komponente | 0,2 mmol | 0,04 mmol | 0,2 mmol | 0,2 mmol | 0,2 mmol |
| n-Hexan | 150 ml | 150 ml | 150 ml | 150 ml | 150 ml |
| 1,3-Butadien | 24,32 g | 24,13 g | 21,04 g | 17,07 g | 17,07 g |
| Temperatur | 60°C | 60°C | 60°C | 60°C | 60°C |
| Reaktionszeit | 1 h | 1 h | 1 h | 1 h | 1 h |

| Polymer | | | | | |
|---|---|---|---|---|---|
| BR | 8,44 g | 8,48 g | 21,02 g | 15,40 g | 9,42 g |
| cis/trans/1,2 in % | 19/76/9 | 45/50/5 | 25/68/6 | 43/54/4 | 68/27/4 |

### Vergleichsbeispiel 20

Die Polymerisation erfolgte in einer 0,5 1-Flasche, die mit einem Kronkorken mit integriertem Septum versehen wurde. Unter Argon wurden zu einer Lösung von 24,1 g 1,3-Butadien in 150 ml n-Hexan nacheinander Lösungen von 0,12 mmol Neodym(IIII)-versatat in 0,342 ml n-Hexan, 4,0 mmol Di(iso-butyl)aluminiumhydrid in 2 ml n-Hexan und 0,24 mmol Ethylaluminiumsesquichlorid in 0,24 ml n-Hexan (molare Angaben für Di(iso-butyl)aluminiumhydrid und Ethylaluminiumsesquichlorid bezogen auf Aluminium) zugegeben. Die Reaktionslösung wurde 1 h auf 60°C temperiert, das Polymere danach durch Fällen der Polymerlösung in Methanol/BKF isoliert und 1 Tag im Vakuumtrockenschrank bei 60°C getrocknet. Es wurden 20,4 g Polybutadien mit einer Selektivitätsverteilung von 92,5 % 1,4-cis-, 7 % 1,4-trans- und 0,5 % 1,2-Doppelbindungen erhalten.

## Patentansprüche

1. Katalysator auf Basis von Verbindungen der Seltenen Erdmetalle bestehend aus
a) einer Verbindung der Seltenen Erdmetalle,
b) einem Cyclopentadien und
c) einem Alumoxan,
wobei das molare Verhältnis der Komponenten (a):(b):(c) im Bereich von 1:0,1 bis 1,99:0,1 bis 1000 liegt.

2. Katalysator nach Anspruch 1, **dadurch gekennzeichnet, daß** das molare Verhältnis der Komponenten (a):(b):(c) im Bereich von 1:0,2 bis 1,8:1 bis 500 liegt.

3. Katalysator nach Anspruch 1, **dadurch gekennzeichnet, daß** das molare Verhältnis der Komponenten (a):(b):(c) im Bereich von 1:0,5 bis 1,5:5 bis 100 liegt.

4. Katalysator nach Ansprüchen 1 bis 3, **dadurch gekennzeichnet, daß** als Verbindungen der Seltenen Erdmetalle deren Alkoholate und Carboxylate sowie die Komplexverbindungen der Seltenen Erdmetalle mit Diketonen und/oder die Additionsverbindungen der Halogenide der Seltenen Erdmetalle mit einer Sauerstoff- oder Stickstoff-Donator-Verbindung eingesetzt werden.

5. Katalysator nach Ansprüchen 1 bis 4, **dadurch gekennzeichnet, daß** als Verbindungen der Seltenen Erdmetalle Neodymversatat, Neodymoctanat und/oder Neodymnaphthenat eingesetzt werden.

6. Katalysator nach Ansprüchen 1 bis 5, **dadurch gekennzeichnet, daß** man als zusätzliche Komponente (d) ein konjugiertes Dien in einer Menge von 1 bis 1000 mol, bezogen auf 1 mol der Komponente (a) einsetzt.

7. Verfahren zur Herstellung des Katalysators nach Anspruch 1, **dadurch gekennzeichnet, daß** man die Komponenten (a), (b) und (c), gegebenenfalls (d), in beliebiger Reihenfolge in einem inerten Lösungs- und/oder Verdünnungsmittel miteinander vermischt.

8. Verwendung des Katalysators nach Anspruch 1 für die Polymerisation von ungesättigten organischen Verbindungen, insbesondere von konjugierten Dienen, gegebenenfalls in Verbindung mit 1-Olefinen.

## Claims

1. Catalyst based on compounds of the rare earth metals, comprising:
a) a compound of the rare earth metals,
b) a cyclopentadiene, and
c) an alumoxane,
the molar ratio of the components (a):(b):(c) being in the range from 1:0.1 to 1.99:0.1 to 1000.

2. Catalyst according to claim 1, **characterised in that** the molar ratio of the components (a):(b):(c) is in the range from 1:0.2 to 1.8:1 to 500.

3. Catalyst according to claim 1, **characterised in that** the molar ratio of the components (a) : (b) : (c) is in the range from 1:0.5 to 1.5:5 to 100.

4. Catalyst according to claims 1 to 3, **characterised in that** as compounds of the rare earth metals there are used their alcoholates and carboxylates as well as the complex compounds of the rare earth metals with diketones and/or the addition compounds of the halides of the rare earth metals with an oxygen donor or nitrogen donor compound.

5. Catalyst according to claims 1 to 4, **characterised in that** neodymium versatate, neodymium octanate and/or neodymium naphthenate are used as compounds of the rare earth metals.

6. Catalyst according to claims 1 to 5, **characterised in that** as additional component (d) a conjugated diene is used in an amount of 1 to 1000 mol, referred to 1 mol of the component (a).

7. Process for preparing the catalyst according to claim 1, **characterised in that** the components (a), (b) and (c), and optionally (d), are mixed with one another in any arbitrary order in an inert solvent and/or diluent.

8. Use of the catalyst according to claim 1 for the polymerisation of unsaturated organic compounds, in particular conjugated dienes, optionally in conjunction with 1-olefins.

## Revendications

1. Catalyseur à base de composés des métaux des terres rares, consistant en
a) un composé des métaux des terres rares,
b) un cyclopentadiène et
c) un alumoxane,
aux proportions molaires de 1:0,1 à 1,99:0,1 à 1000 entre les composants (a):(b):(c).

2. Catalyseur selon revendication 1, **caractérisé en ce que** les proportions molaires entre les composants (a):(b):(c) se situent dans l'intervalle de 1:0,2 à 1,8:1 à 500.

3. Catalyseur selon revendication 1, **caractérisé en ce que** les proportions molaires entre les composants (a):(b):(c) se situent dans l'intervalle de 1:0,5 à 1,5:5 à 100.

4. Catalyseur selon les revendications 1 à 3, **caractérisé en ce que** l'on utilise en tant que composés des métaux des terres rares leurs alcoolates et leurs carboxylates ou encore les complexes des métaux des terres rares de dicétones et/ou les composés d'addition des halogénures des métaux des terres rares et d'un donateur d'oxygène ou d'azote.

5. Catalyseur selon les revendications 1 à 4, **caractérisé en ce que** l'on utilise en tant que composés de métaux des terres rares le "versatate" de néodyme, l'octanate de néodyme et/ou le naphténate de néodyme.

6. Catalyseur selon les revendications 1 à 5, **caractérisé en ce que** l'on met en oeuvre en tant que composant supplémentaire (d) un diène conjugué en quantité de 1 à 1000 mol, pour une mole du composant (a).

7. Procédé pour la préparation du catalyseur selon revendication 1, **caractérisé en ce que** l'on mélange entre eux les composants (a), (b) et (c), et le cas échéant (d), dans un ordre quelconque, dans un solvant et/ou diluant inerte.

8. Utilisation du catalyseur selon la revendication 1, pour la polymérisation de composés organiques insaturés, en particulier de diènes conjugués, le cas échéant en combinaison avec des 1-oléfines.
